# EUROPÄISCHE PATENTSCHRIFT

(11) **EP 2 606 847 B1**
(45) Veröffentlichungstag und Bekanntmachung des Hinweises auf die Patenterteilung: **08.02.2017**
(21) Anmeldenummer: 12198372.0
(22) Anmeldetag: 20.12.2012
(51) Int. Cl.: A61C 1/06, A61C 1/12, A61C 1/08

(54) **Dentales Handstück zur Behandlung von Zähnen**
Dental handpiece for the treatment of teeth
Pièce à main dentaire destinée au traitement de dents

(30) Priorität: 20.12.2011 DE 102011089252
(43) Veröffentlichungstag der Anmeldung: 26.06.2013
(73) Patentinhaber: Sirona Dental Systems GmbH, 64625 Bensheim (DE)
(72) Erfinder: Rein, Matthias, 64653 Lorsch (DE); Müller, Steffen, 64673 Zwingenberg (DE); Bierbaum, Thomas, 64625 Bensheim (DE)
(74) Vertreter: Sommer, Peter

(56) Entgegenhaltungen:
- DE-A1-102009 045 189

## Beschreibung

### Technisches Gebiet

Die Erfindung betrifft ein dentales Handstück zur Behandlung von Zähnen, umfassend ein erstes Bauteil und ein zweites Bauteil, wobei das erste Bauteil mindestens zwei Lichtquellen umfasst, wobei das zweite Bauteil mindestens einen Lichtleiter umfasst, der von einer der Lichtquellen ausgestrahlte Lichtstrahlen zu einem Lichtaustritt des zweiten Bauteils leitet.

### Stand der Technik

Aus dem Stand der Technik sind mehrere dentale Handstücke zur Behandlung von Zähnen bekannt, die zwei Lichtquellen aufweisen. Die Umschaltung zwischen den beiden Lichtquellen erfolgt meist aber auf eine technisch aufwendige Art und Weise. Aus dem Stand der Technik sind auch Handstücke mit nur einer Lichtquelle bekannt, die Weißlicht zur Beleuchtung oder Fluoreszenzlicht abstrahlen. Es werden auch Lichtquellen zur photodynamischen Therapie oder zum Aushärten von Kompositen verwendet.

Ein Handstück, bei dem durch ein Umdrehen der Beleuchtungsvorrichtung in der Fassung eine andere Leuchtfarbe gewählt werden kann, ist in der DE 10 2009 045 189 A1 offenbart. Hierzu muss die Beleuchtungsvorrichtung aus der Fassung und damit dem Griffteil des Handstücks entfernt, gedreht und wieder in die Fassung eingesetzt werden.

In der US 6,769,911 B2 ist ein dentales Handstück offenbart, das einen Bohrkopf zur Entfernung von Karies und eine integrierte Lichtquelle aufweist. Die Lichtquelle strahlt ein Spektrum ab, das die Zahnsubstanz anregt und Fluoreszenzlicht erzeugt und dadurch eine Karies-Detektion ermöglicht. Insbesondere wird eine Lichtquelle mit blauviolettem Licht verwendet. In einem ersten Schritt wird eine kariöse Region identifiziert und anschließend mittels eines im Bohrkopf eingespannten Werkzeugs entfernt. Die verwendete Lichtquelle dient also nicht zur Ausleuchtung der zu behandelnden Region sondern zur Fluoreszenzdiagnostik.

Die US 4,515,476 A1 offenbart eine Vorrichtung zur Bestimmung von Karies unter Verwendung von Fluoreszenzlicht. Dazu wird eine LED mit einer vorgegebenen Wellenlänge, die Fluoreszenzlicht am Zahn erzeugt, an einem herkömmlichen dentalen Handstück befestigt. Zur Detektion des Fluoreszenzlichts wird in Beobachtungsrichtung zusätzlich ein Absorptionsfilter verwendet, um die emittierte Wellenlänge beziehungsweise den emittierten Wellenlängenbereich zu verstärken.

In der DE 20 2004 016 365 U1 ist eine Vorrichtung zur Bearbeitung von Zahnersatzteilen offenbart, die eine Lichtquelle mit mehreren Leuchtmitteln aufweist, die ein blaues oder ultraviolettes Licht abgeben. Dieses Licht macht kleinste Anhaftungen eines Occlusionssprays durch Fluoreszenz sichtbar.

In der DE 103 05 599 A1 ist eine Vorrichtung zur bildgebenden Diagnose von Gewebe offenbart, wobei in einem ersten Modus Licht von einer ersten Lichtquelle zur diagnostischen Weißlicht-Endoskopie DWLE und in einem zweiten Modus Licht einer zweiten Lichtquelle zur diagnostischen Autofluoreszenz-Endoskopie DAFE auf das zu untersuchende Gewebe projiziert wird. Das Licht wird über einen Lichtleiter zugeführt. Das Umschalten zwischen dem ersten Modus und dem zweiten Modus erfolgt durch optische Elemente, wie Blenden und Spiegel, die mechanisch in den Strahlengang eingebracht werden.

Ein Nachteil dieser Vorrichtung besteht darin, dass das Umschalten zwischen den verschiedenen Modi aufwendig durch das Einbringen von Blenden und Spiegeln in die Beleuchtungsstrahlengänge der Lichtquellen erfolgt.

Die Aufgabe der vorliegenden Erfindung besteht daher darin, ein dentales Handstück mit mindestens zwei Lichtquellen bereitzustellen, das einen technisch weniger aufwendigen Umschaltungsvorgang erlaubt. Eine weitere Aufgabe der folgenden Erfindung besteht darin, das dentale Handstück möglichst kompakt auszugestalten.

### Darstellung der Erfindung

Die Erfindung betrifft ein dentales Handstück, umfassend ein erstes Bauteil und ein zweites Bauteil. Das erste Bauteil umfasst dabei mindestens zwei Lichtquellen, wobei das zweite Bauteil mindestens einen Lichtleiter umfasst, der von einer der Lichtquellen ausgestrahlte Lichtstrahlen zu einem Lichtaustritt des zweiten Bauteils leitet. In einem ersten Modus ist der Lichtleiter in einem ersten Strahlengang der ersten Lichtquelle angeordnet und in mindestens einem zweiten Modus ist der Lichtleiter in einem zweiten Strahlengang der zweiten Lichtquelle angeordnet. Das dentale Handstück ist mittels eines mechanischen Verstellmittels durch eine mechanische Verschiebung des zweiten Bauteils relativ zum ersten Bauteil zwischen dem ersten Modus und dem zweiten Modus verstellbar. Das mechanische Verstellmittel ist dabei so ausgestaltet, dass es eine mechanische Verschiebung durch Verdrehen des zweiten Bauteils relativ zum ersten Bauteil um eine gemeinsame Drehachse ermöglicht, wobei beim Verdrehen das erste Bauteil mit dem zweiten Bauteil verbunden bleibt.

Dadurch wird die Umschaltung auf eine einfache Art und Weise ermöglicht. Die Anschlussgeometrie zwischen dem ersten Bauteil und dem zweiten Bauteil kann beispielsweise die gemeinsame Drehachse aufweisen. Die beiden Lichtquellen können beispielsweise am Rand des ersten Bauteils, wie eines Elektromotors, angeordnet sein, um durch eine kleine Verdrehung des zweiten Teils in Relation zum ersten Teil die Umschaltung zwischen den Modi zu ermöglichen.

Das dentale Handstück bei der Behandlung von Zähnen kann ein beliebiges dentales Instrument, beispielsweise mit einem Schleifer oder einem Bohrer, sein. Das dentale Handstück kann beispielsweise ein Instrument zur Präparation, Implantologie oder Prophylaxe sein. Das dentale Handstück kann auch ein Ultraschall-Instrument oder ein abrasiv abtragendes Instrument sein. Das dentale Handstück kann auch eine dentale Kamera aufweisen, wobei dann die Lichtquelle zur Ausleuchtung der aufzunehmenden Region dient. Das dentale Handstück kann einen dentalen Laser aufweisen, der ebenfalls zur Behandlung oder zur Abtragung von Zahnschmelz oder von Zahnfleisch dient. Die Lichtquellen können beispielsweise zur Beleuchtung eines zu behandelnden Gebietes oder zur Diagnose von Karies verwendet werden. Die Lichtquellen können auch zur photodynamischen Therapie, zum Aushärten von Kompositen oder zum Ausleuchten einer Region während einer Aufnahme verwendet werden. Die Lichtquellen können ein Licht mit einer bestimmten Wellenlänge oder mit einem bestimmten Wellenlängenspektrum abstrahlen. Beispielsweise können LEDs oder Laser-Dioden verwendet werden. Zur Beleuchtung können weiße LEDs mit einem tageslichtähnlichen Spektrum verwendet werden. Im ersten Modus wird der Lichtleiter mittels des mechanischen Verstellmittels in den Strahlengang der ersten Lichtquelle verschoben, so dass die von der ersten Lichtquelle ausgestrahlten Lichtstrahlen in den Lichtleiter eingekoppelt werden und am Lichtaustritt austreten. Der Lichtaustritt kann beispielsweise im Kopfbereich des dentalen Handstücks in der Nähe eines eingespannten Werkzeugs, wie eines Schleifers oder Bohrers, angeordnet sein. Im zweiten Modus wird der Lichtleiter entsprechend in den Strahlengang der zweiten Lichtquelle verschoben, so dass die Lichtstrahlen der zweiten Lichtquelle in den Lichtleiter eingekoppelt werden und zum Lichtaustritt geleitet werden. Das mechanische Verstellmittel kann beliebig ausgestaltet sein. Beispielsweise kann das mechanische Verstellmittel eine Einrastvorrichtung mit einem Anschlag aufweisen, die beispielsweise beim Verdrehen des ersten Bauteils in Relation zum zweiten Bauteil an bestimmten Stellen einrastet, die die Anordnung des Lichtleiters und der Lichtquellen im ersten Modus und im zweiten Modus festlegen. Das mechanische Verstellmittel kann auch so gestaltet sein, dass das Umschalten durch eine linienförmige mechanische Verschiebung des zweiten Bauteils relativ zum ersten Bauteil erfolgt. Das dentale Handstück kann auch mehr als zwei Lichtquellen aufweisen, wobei mittels des mechanischen Verstellmittels das dentale Handstück zwischen den einzelnen Modi verstellbar sein kann.

Ein Vorteil des dentalen Handstücks besteht darin, dass das Umschalten zwischen dem ersten Modus und dem zweiten Modus auf eine einfache Art und Weise durch eine mechanische Verschiebung des zweiten Bauteils relativ zum ersten Bauteil erfolgt. Dazu sind also keine zusätzlichen optischen Elemente, wie Blenden oder Spiegel, erforderlich.

Ein weiterer Vorteil dieses dentalen Handstücks besteht darin, dass durch die einfache Art und Weise des mechanischen Verstellmittels zur Umschaltung zwischen dem ersten Modus und dem zweiten Modus das dentale Handstück sehr kompakt ausgestaltet sein kann. Die Kompaktheit eines Instruments ist besonders im dentalen Bereich vorteilhaft, um eine dentale Behandlung im eng bemessenen Mundraum eines Patienten durchzuführen.

Vorteilhafterweise kann das mechanische Verstellmittel einen ersten Anschlag für den ersten Modus und einen zweiten Anschlag für den zweiten Modus aufweisen.

Dadurch ist das Verdrehen des zweiten Bauteils in Relation zum ersten Bauteil durch die beiden Anschläge begrenzt.

Vorteilhafterweise kann das mechanische Verstellmittel ein erstes Einrastmittel für den ersten Modus und ein zweites Einrastmittel für den zweiten Modus aufweisen.

Dadurch kann das zweite Bauteil an einer ersten Position für den ersten Modus und einer zweiten Position für einen zweiten Modus in Relation zum ersten Teil einrasten. Dies ermöglicht eine genaue Positionierung des Lichtleiters im Strahlengang einer der Lichtquellen.

Vorteilhafterweise kann der Lichtleiter so geschliffen sein, dass eine Einkopplungsfläche gewölbt ist und wie eine Sammellinse wirkt.

Dadurch wird die optische Einkopplung der Lichtstrahlen, die von einer der Lichtquellen ausgestrahlt wurden, verbessert. Durch die Lichtbrechung an der konvex gewölbten Einkopplungsfläche werden die Lichtstrahlen zu einer Symmetrieachse des Lichtleiters fokussiert, sodass die optische Einkopplung verbessert wird.

Vorteilhafterweise kann das erste Bauteil einen Elektromotor umfassen, wobei die erste Lichtquelle und die zweite Lichtquelle auf einer Oberfläche angeordnet sind, die dem zweiten Bauteil zugewandt ist.

Das erste Bauteil mit dem Elektromotor kann eine bestimme Anschlussgeometrie aufweisen, um durch eine Verdrehbewegung mit dem zweiten Bauteil, wie einem Winkelstück, verbunden zu werden. Die beiden Lichtquellen können in einem Randbereich einer meist kreisförmigen Oberfläche des Elektromotors angeordnet sein.

Vorteilhafterweise können die erste Lichtquelle und die zweite Lichtquelle auf einer Oberfläche angeordnet sein, die axial zu der Drehachse einer Anschlussgeometrie des ersten Bauteils zum Verbinden mit einem Gegenstück am zweiten Bauteil angeordnet ist.

Dadurch strahlen die Lichtquellen ihr Licht parallel zur Drehachse der Anschlussgeometrie ab. Der Lichtleiter im zweiten Bauteil ist deshalb ebenfalls parallel zur Drehachse ausgerichtet.

Vorteilhafterweise können die erste Lichtquelle und die zweite Lichtquelle auf einer Oberfläche angeordnet sein, die radial zu der Drehachse einer Anschlussgeometrie des ersten Bauteils zum Verbinden mit einem Gegenstück am zweiten Bauteil angeordnet ist.

Dadurch können die beiden Lichtquellen beispielsweise auf einer Mantelfläche der Anschlussgeometrie angeordnet sein, die radial zur Drehachse der Anschlussgeometrie verläuft. Der Lichtleiter im zweiten Bauteil ist dementsprechend angewinkelt angeordnet, so dass die Lichtstrahlen seitlich zur Drehachse der Anschlussgeometrie abgestrahlt werden und anschließend durch den gebogenen Lichtleiter zum Lichtaustritt geleitet werden.

Vorteilhafterweise kann das zweite Bauteil ein Winkelstück sein, das ein Bearbeitungswerkzeug in einem Kopfteil des Winkelstücks aufweist, wobei der Lichtaustritt zur Ausleuchtung des zu behandelnden Bereichs ebenfalls im Kopfteil des Winkelstücks angeordnet ist.

Dadurch ist der Lichtaustritt in der Nähe des Bearbeitungswerkzeugs angeordnet. Der Lichtleiter kann dabei so geformt sein, dass die vom Lichtaustritt abgestrahlten Lichtstrahlen in Form eines Lichtkegels die zu behandelnde Region im Mundraum des Patienten ausleuchten. Die Lichtstrahlen können zusätzlich auf einen Bearbeitungspunkt an der Spitze des eingesetzten Werkzeugs fokussiert werden, um dort eine noch bessere Ausleuchtung zu ermöglichen.

Vorteilhafterweise kann die erste Lichtquelle weißes Licht zur Beleuchtung abstrahlen und die zweite Lichtquelle kann Diagnoselicht zur Fluoreszenzdiagnostik abstrahlen.

Dadurch kann der Benutzer auf einfache Art und Weise zwischen dem ersten Modus zur Beleuchtung der zu behandelnden Region im Mundraum des Patienten und einem zweiten Modus zur Diagnose umschalten. Der Benutzer kann also zunächst im zweiten Modus zur Diagnose die mit Karies befallenen Stellen detektieren, durch Verdrehen des Handstücks in den ersten Modus umschalten und anschließend die detektierten mit Karies befallenen Stellen der Zähne entfernen. Dies ermöglicht eine schnelle Behandlung unter Verwendung nur eines dentalen Handstücks.

Vorteilhafterweise kann das Diagnoselicht ein Spektrum mit einer Wellenlänge zwischen 380 nm und 450 nm aufweisen.

Das Diagnoselicht mit dieser Wellenlänge ist besonders vorteilhaft, um Fluoreszenzlicht im Zahnschmelz und an den mit Karies befallenen Stellen der Zähne anzuregen. Diagnoselicht mit einem Spektrum der Wellenlänge zwischen 400 nm und 410 nm ist besonders gut zur Diagnose geeignet.

Vorteilhafterweise kann das dentale Handstück eine Steuerung aufweisen, die im ersten Modus die erste Lichtquelle einschaltet und die zweite Lichtquelle abschaltet und die im zweiten Modus die zweite Lichtquelle einschaltet und die erste Lichtquelle abschaltet.

Dadurch wird nur die im jeweiligen Modus verwendete Lichtquelle eingeschaltet und die übrigen Lichtquellen abgeschaltet. Die Steuerung kann beispielsweise eine elektronische Steuerung oder als mechanische Taster oder als Hebel ausgestaltet sein, die beim Verdrehen des zweiten Teils in Relation zum ersten Teil die zu verwendende Lichtquelle einschalten und die übrigen Lichtquellen abschalten.

Vorteilhafterweise kann durch die mechanische Verschiebung des zweiten Bauteils relativ zum ersten Bauteil zwischen dem ersten Modus und dem zweiten Modus ein Sensor ausgelöst werden, der ein Signal an die Steuerung übermittelt.

Dadurch erfolgt die Umschaltung mittels der Steuerung automatisch beim Verschieben des zweiten Bauteils relativ zum ersten Bauteil.

Das dentale Handstück kann auch mehr als zwei Lichtquellen aufweisen, die beispielsweise im Randbereich einer Stirnfläche des ersten Bauteils angeordnet sein können. Die Verstellung zwischen den einzelnen Modi kann dann beispielsweise durch eine Rotationsbewegung um festgelegte Winkelbereiche erfolgen, wobei das zweite Bauteil an bestimmten Winkelpositionen relativ zum ersten Bauteil einrastet, an denen der Lichtleiter im Strahlengang einer der Lichtquellen angeordnet ist.

### Kurzbeschreibung der Zeichnungen

Die Erfindung wird anhand der Zeichnungen erläutert. Es zeigt die
- Fig. 1: ein dentales Handstück zur Behandlung von Zähnen, umfassend zwei Lichtquellen;
- Fig. 2: eine Stirnfläche des zweiten Bauteils;
- Fig. 3: eine Stirnfläche des ersten Bauteils;
- Fig. 4: den mechanischen Aufbau einer Einrastvorrichtung;
- Fig. 5: Skizze zur Verdeutlichung des Umschaltvorgangs;
- Fig. 6: den mechanischen Aufbau einer alternativen Einrastvorrichtung im ersten Modus;
- Fig. 7: den mechanischen Aufbau der alternativen Einrastvorrichtung im zweiten Modus;
- Fig. 8: ein dentales Handstück wie in Fig. 1 mit axial angeordneten Lichtquellen.

### Ausführungsbeispiel

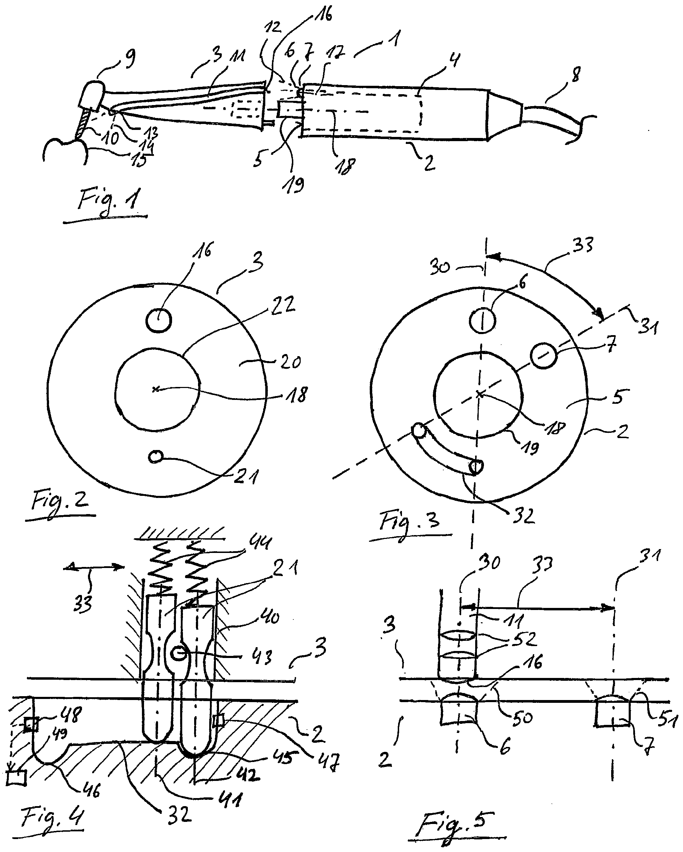

Die Fig.1 zeigt ein dentales Handstück 1 zur Behandlung von Zähnen, umfassend ein erstes Bauteil 2 und ein zweites Bauteil 3. Das erste Bauteil umfasst einen Elektromotor 4, auf dessen Stirnfläche 5, die dem zweiten Bauteil 3 zugewandt ist, zwei Lichtquellen 6 und 7 angeordnet sind. Das erste Bauteil 2 weist ein Kabel 8 auf, das das dentale Handstück mit Strom versorgt. Das dentale Handstück kann auch mit Druckluft mittels einer Turbine betrieben werden. Das dentale Handstück kann auch ein beliebiges dentales Instrument zur rotierenden, oszillierenden, strahlenden, abrasiven Abtragung oder Behandlung von Zahngewebe oder ein einfacher Handschaber mit mindestens zwei Lichtquellen sein. Das zweite Bauteil 3 ist ein Winkelstück, das ein Kopfteil 9 aufweist, in das ein Bearbeitungswerkzeug 10 eingespannt ist. Das Winkelstück 3 weist einen Lichtleiter 11 auf, der die von der Lichtquelle 6 oder 7 ausgestrahlten Lichtstrahlen 12 an einen Lichtaustritt 13 im Kopfbereich des Winkelstücks 3 weiterleitet. Die vom Lichtaustritt ausgestrahlten Lichtstrahlen werden in Form eines Lichtkegels 14 zur Beleuchtung oder Diagnose auf eine zu behandelnde Region eines Zahns 15 projiziert. Der Lichtleiter 11 weist eine Einkopplungsfläche 16 auf, die abhängig vom jeweiligen Modus im Strahlengang 17 einer der Lichtquellen 6 oder 7 angeordnet wird. Die Verstellung zwischen dem ersten Modus und dem zweiten Modus erfolgt durch die Verdrehung des zweiten Teils 3 in Relation zum ersten Teil 2 um eine gemeinsame Drehachse 18, die durch eine Anschlussgeometrie 19 vorgegeben wird. Die Stirnfläche 5, auf der die Lichtquellen 6, 7 angeordnet sind, ist somit radial zur Drehachse 18 ausgerichtet.

Die Fig.2 zeigt eine Stirnfläche 20 des zweiten Bauteils 3, wobei im oberen Bereich die Einkopplungsfläche 16 des Lichtleiters 11 und im unteren Bereich eine Einrastvorrichtung 21 angeordnet ist. Die gemeinsame Drehachse 18 ist durch ein kreisförmiges Gegenstück 22 zur Anschlussgeometrie 19 des ersten Teils 2 definiert.

Die Fig.3 zeigt die Stirnfläche 5 des ersten Bauteils 2, wobei an einer ersten Winkelposition 30 die erste Lichtquelle 6 und an einer zweiten Winkelposition 31 die zweite Lichtquelle 7 angeordnet ist. Im unteren Bereich der Stirnfläche 5 ist das Gegenstück 32 zur Einrastvorrichtung 21 aus Fig.2 angeordnet. Das Gegenstück 32 ist eine Vertiefung zur Führung der Bolzen der Einrastvorrichtung 21, wobei die Einrastvorrichtung, bestehend aus dem Führungsbolzen 21 und der Vertiefung 32 so ausgestaltet ist, dass die Führungsbolzen 21 an der ersten Winkelposition 30 und an der zweiten Winkelposition 31 einrasten. Dadurch wird eine genaue Positionierung der Einkopplungsfläche 16 des Lichtleiters 11 im Strahlengang einer der beiden Lichtquellen 6 oder 7 ermöglicht. Die gemeinsame Drehachse 18 ist wie ein Kreuz dargestellt, das durch die Anschlussgeometrie 19 definiert ist. Die Verstellung zwischen dem ersten Modus und dem zweiten Modus erfolgt durch eine Drehbewegung 33 des zweiten Teils 3 in Relation zum ersten Teil 2 zwischen der ersten Winkelposition 30 und der zweiten Position 31, wie durch den Pfeil dargestellt ist. Die Verstellung zwischen drei oder mehr Modi durch die Drehbewegung 33 ist in der gleichen Art und Weise möglich.

Die Fig.4 zeigt den genauen mechanischen Aufbau der Einrastvorrichtung, bestehend aus den Führungsbolzen 21 und der Vertiefung 32. Die Führungsbolzen werden in einer Führung 40 entlang der Führungsachsen 41 und 42 geführt. Zwischen den Führungsbolzen 21 ist ein Anschlag 43 in Form eines Stifts angeordnet, der die Bewegungsfreiheit der Führungsbolzen 21 begrenzt. Am oberen Ende sind die Führungsbolzen 21 mit Federn 44 versehen, die die Führungsbolzen 21 in die Richtung des zweiten Bauteils 3 drücken. Die Vertiefung 32 weist eine erste Mulde 45 an der ersten Winkelposition 30 und eine zweite Mulde 46 an der zweiten Winkelposition 31 aus Fig.3 auf. Durch die Drehbewegung 33 des zweiten Bauteils 3 in Relation zum ersten Bauteil 2 werden die Führungsbolzen 21 senkrecht zu den Führungsachsen 41 und 42 bewegt und rasten jeweils in die Mulden 45 oder 46 ein. Die Vertiefung 32 ist so bemessen, dass sie auch zu Anschlussgeometrien von herkömmlichen dentalen Handstücken passt, die keine Umschaltung durch Verdrehung ermöglichen. Dadurch kann das erste Bauteil 2 mit dem Elektromotor 4 auch mit herkömmlichen Winkelstücken verbunden werden, wobei dann nur eine der beiden Lichtquellen 6 oder 7 genutzt wird. Das erste Bauteil 2 weist einen ersten Sensor 47 und einen zweiten Sensor 48 auf. Der erste Sensor 47 wird ausgelöst, wenn die Führungsbolzen 21 in die erste Mulde 45 einrasten und der zweite Sensor 48 wird ausgelöst, wenn die Führungsbolzen 21 in die zweite Mulde 46 einrasten. Daraufhin übermittelt der erste Sensor 47 oder der zweite Sensor 48 ein Signal an einer elektronischen Steuerung 49, die daraufhin die an der Einkopplungsfläche 16 des Lichtleiters angeordnete Lichtquelle einschaltet und die andere Lichtquelle abschaltet.

Die Fig.5 zeigt das erste Bauteil 2 und das zweite Bauteil 3, wobei durch die Drehbewegung 33 der Lichtleiter 11 mit der Einkopplungsfläche 16 zwischen der ersten Winkelposition 30 und der zweiten Winkelposition 31 bewegt wird, so dass die Einkopplungsfläche 16 im ersten Modus im Strahlenbereich 50 der ersten Lichtquelle 6 und im zweiten Modus im Strahlenbereich 51 der zweiten Lichtquelle 7 angeordnet wird. Die erste Lichtquelle 6 kann beispielsweise Licht zur Beleuchtung mit einem tageslichtähnlichen Spektrum abstrahlen und die zweite Lichtquelle 7 ein Diagnoselicht mit einem Spektrum der Wellenlänge zwischen 400 nm und 410 nm abstrahlen. Die Einkopplungsfläche 16 ist gewölbt ausgestaltet und wirkt wie eine Sammellinse zur Verbesserung der optischen Einkopplung in den Lichtleiter 11. Zusätzlich sind in den Lichtleiter 11 optische Linsen 52 integriert, die die optische Einkopplung in den Lichtleiter 11 zusätzlich verbessern.

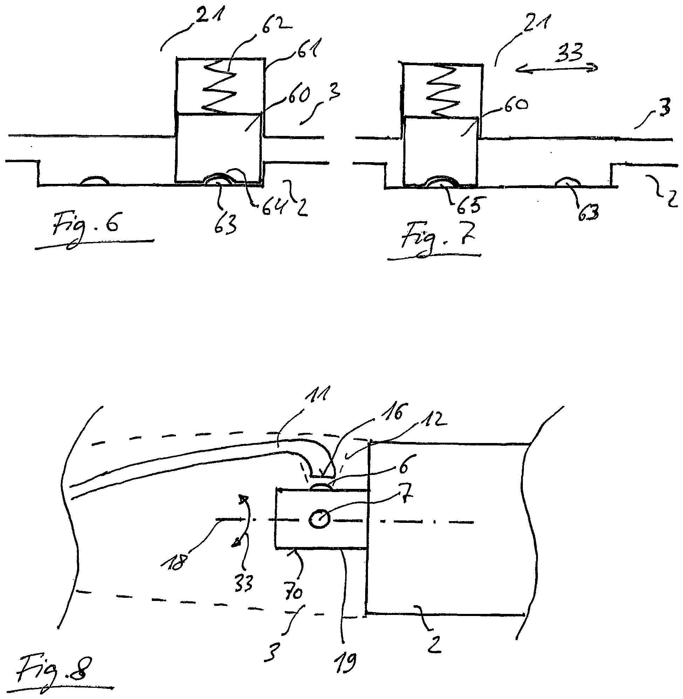

Die Fig. 6 zeigt eine alternative Einrastvorrichtung 21 im ersten Modus, wobei ein zylinderförmig oder quaderförmig geformter Bolzen 60 innerhalb einer Führung 61 geführt ist und mittels einer Feder 62 in Richtung des ersten Teils 2 gedrückt wird. Im ersten Modus rastet ein erster Rastnocken 63 in eine Mulde 64 des Bolzens 60 ein.

Die Fig. 7 zeigt die Einrastvorrichtung 21 aus Fig. 6 im zweiten Modus, wobei nach der Ausführung der Drehbewegung 33 des zweiten Teils 3 in Relation zum ersten Teil 2 ein zweiter Rastnocken 65 in die Mulde 64 des Bolzens 60 einrastet. Dadurch ermöglicht die Einrastvorrichtung 21 eine definierte Positionierung des zweiten Teils 3 in Relation zum ersten Teil 2. Gemäß der Erfindung sind auch andere Einrastvorrichtungen möglich, die eine genaue Positionierung ermöglichen.

Die Fig. 8 zeigt das dentale Handstück aus Fig. 1 mit dem Unterschied, dass die erste Lichtquelle 6 und die zweite Lichtquelle 7 auf einer Mantelfläche 70 der Anschlussgeometrie 19 angeordnet sind. Beim Verstellen zwischen dem ersten Modus und dem zweiten Modus durch die Drehbewegung 33 wird jeweils entweder die erste Lichtquelle 6 oder die zweite Lichtquelle 7 entgegengesetzt zur Einkopplungsfläche 16 des Lichtleiters 11 angeordnet. Die Drehbewegung 33 erfolgt dabei um die Drehachse 18, die durch die Anschlussgeometrie 19 definiert ist. Der Lichtleiter 11 ist gebogen und leitet die Lichtstrahlen 12 einer der Lichtquellen 6 oder 7 zu einem Lichtaustritt 13. Die Anschlussgeometrie 19 kann auch kegelförmig ausgestaltet sein, wobei die Einkopplungsfläche des Lichtleiters stets im Strahlengang der Lichtquellen anzuordnen ist.

### Bezugszeichen

- 1: dentales Handstück
- 2: erstes Bauteil
- 3: zweites Bauteil
- 4: Elektromotor
- 5: Stirnfläche des Elektromotors
- 6: Lichtquelle
- 7: Lichtquelle
- 8: Kabel
- 9: Kopfteil
- 10: Bearbeitungswerkzeug
- 11: Lichtleiter
- 12: ausgestrahlte Lichtstrahlen
- 13: Lichtaustritt
- 14: Lichtkegel
- 15: zu behandelnde Region eines Zahns
- 16: Einkopplungsfläche
- 17: Strahlengang
- 18: gemeinsame Drehachse
- 19: Anschlussgeometrie
- 20: Stirnfläche
- 21: Einrastvorrichtung
- 22: kreisförmiges Gegenstück
- 30: erste Winkelposition
- 31: zweite Winkelposition
- 32: Gegenstück
- 33: Drehbewegung
- 40: Führung
- 41: Führungsachse
- 42: Führungsachse
- 43: Anschlag
- 44: Federn
- 45: erste Mulde
- 46: zweite Mulde
- 47: erste Sensor
- 48: zweiter Sensor
- 49: Steuerung
- 50: Strahlenbereich
- 51: Strahlenbereich
- 52: optische Linsen
- 60: Bolzen
- 61: Führung
- 62: Feder
- 63: erster Rastnocken
- 64: Mulde
- 65: zweiter Rastnocken
- 70: Mantelfläche

## Patentansprüche

1. Dentales Handstück (1), umfassend ein erstes Bauteil (2) und ein zweites Bauteil (3), wobei das erste Bauteil (2) mindestens zwei Lichtquellen (6, 7) umfasst, wobei das zweite Bauteil (3) mindestens einen Lichtleiter (11) umfasst, der von einer der Lichtquellen (6, 7) ausgestrahlte Lichtstrahlen (12) zu einem Lichtaustritt (13) des zweiten Bauteils (3) leitet, wobei in einem ersten Modus der Lichtleiter (11) in einem ersten Strahlengang (50) der ersten Lichtquelle (6) angeordnet ist und in mindestens einem zweiten Modus der Lichtleiter (11) in einem zweiten Strahlengang (51) der zweiten Lichtquelle (7) angeordnet ist, wobei mittels eines mechanischen Verstellmittels (21, 32) durch eine mechanische Verschiebung des zweiten Bauteils (3) relativ zum ersten Bauteil (2) das dentale Handstück (1) zwischen dem ersten Modus und dem zweiten Modus verstellbar ist, wobei das mechanische Verstellmittel (21, 32) so ausgestaltet ist, dass es eine mechanische Verschiebung durch Verdrehen (33) des zweiten Bauteils (3) relativ zum ersten Bauteil (1) um eine gemeinsame Drehachse (18) ermöglicht, **dadurch gekennzeichnet, dass** beim Verdrehen das erste Bauteil (1) mit dem zweiten Bauteil (3) verbunden bleibt.

2. Dentales Handstück (1) nach Anspruch 1, **dadurch gekennzeichnet, dass** das mechanische Verstellmittel (21, 32) einen ersten Anschlag (45) für den ersten Modus und einen zweiten Anschlag (46) für den zweiten Modus aufweist.

3. Dentales Handstück (1) nach Anspruch 1 oder 2, **dadurch gekennzeichnet, dass** das mechanische Verstellmittel (21, 32) ein erstes Einrastmittel für den ersten Modus und ein zweites Einrastmittel für den zweiten Modus aufweist.

4. Dentales Handstück (1) nach einem der Ansprüche 1 bis 3, **dadurch gekennzeichnet, dass** der Lichtleiter (11) so geschliffen ist, dass eine Einkopplungsfläche (16) gewölbt ist und wie eine Sammellinse wirkt.

5. Dentales Handstück (1) nach einem der Ansprüche 1 bis 4, **dadurch gekennzeichnet, dass** das erste Bauteil (2) einen Elektromotor (4) umfasst, wobei die erste Lichtquelle (6) und die zweite Lichtquelle (7) auf einer Oberfläche (5) angeordnet sind, die dem zweiten Bauteil (3) zugewandt ist.

6. Dentales Handstück (1) nach einem der Ansprüche 1 bis 5, **dadurch gekennzeichnet, dass** das zweite Bauteil (3) ein Winkelstück ist, das ein Bearbeitungswerkzeug (10) in einem Kopfteil (9) des Winkelstücks aufweist, wobei der Lichtaustritt (13) zur Ausleuchtung des zu behandelnden Bereichs (15) ebenfalls im Kopfteil (9) des Winkelstücks angeordnet ist.

7. Dentales Handstück (1) nach einem der Ansprüche 1 bis 6, **dadurch gekennzeichnet, dass** die erste Lichtquelle (6) weißes Licht zur Beleuchtung abstrahlt und die zweite Lichtquelle (7) Diagnoselicht zur Fluoreszenzdiagnostik abstrahlt.

8. Dentales Handstück (1) nach Anspruch 7, **dadurch gekennzeichnet, dass** das Diagnoselicht ein Spektrum mit einer Wellenlänge zwischen 380 nm und 450 nm aufweist.

9. Dentales Handstück (1) nach einem der Ansprüche 1 bis 8, **dadurch gekennzeichnet, dass** das dentale Handstück (1) eine Steuerung (49) aufweist, die im ersten Modus die erste Lichtquelle (6) einschaltet und die zweite Lichtquelle (7) abschaltet und die im zweiten Modus die zweite Lichtquelle (7) einschaltet und die erste Lichtquelle (6) abschaltet.

10. Dentales Handstück (1) nach Anspruch 9, **dadurch gekennzeichnet, dass** durch die mechanische Verschiebung des zweiten Bauteils (3) relativ zum ersten Bauteil (2) zwischen dem ersten Modus und dem zweiten Modus ein Sensor (47, 48) ausgelöst wird, der ein Signal an die Steuerung (49) übermittelt.

## Claims

1. A dental handpiece (1) comprising a first component (2) and a second component (3), wherein the first component (2) comprises at least two light sources (6, 7), wherein the second component (3) comprises at least one light guide (11) which guides light beams (12) emitted by one of the light sources (6, 7) to a light exit (13) of the second component (3), wherein in a first mode, the light guide (11) is arranged in a first beam path (50) of the first light source (6), and in at least one second mode, the light guide (11) is arranged in a second beam path (51) of the second light source (7), wherein the dental handpiece (1) is adjustable between the first mode and the second mode via a mechanical adjusting means (21, 32) by a mechanical shift of the second component (3) relative to the first component (2), wherein the mechanical adjusting means (21, 32) is designed such that it enables a mechanical shift by rotating (33) the second component (3) relative to the first component (1) about a common axis of rotation (18), **characterized in that** the first component (1) remains connected with the second component (3) during the rotation.

2. The dental handpiece (1) according to claim 1, **characterized in that** the mechanical adjusting means (21, 32) has a first stop (45) for the first mode, and a second stop (46) for the second mode.

3. The dental handpiece (1) according to claim 1 or 2, **characterized in that** the mechanical adjusting means (21, 32) has a first engaging means for the first mode, and a second engaging means for the second mode.

4. The dental handpiece (1) according to one of claims 1 to 3, **characterized in that** the light guide (11) is ground such that a coupling surface (16) is curved and functions like a collecting lens.

5. The dental handpiece (1) according to one of claims 1 to 4, **characterized in that** the first component (2) comprises an electric motor (4), wherein the first light source (6) and the second light source (7) are arranged on a surface (5) that faces the second component (3).

6. The dental handpiece (1) according to one of claims 1 to 5, **characterized in that** the second component (3) is a contra-angle handpiece that has a processing tool (10) in a head part (9) of the contra-angle handpiece, wherein the light exit (13) is also arranged in the head part (9) of the contra-angle handpiece to illuminate the region (15) to be treated.

7. The dental handpiece (1) according to one of claims 1 to 6, **characterized in that** the first light source (6) emits white light for illumination, and the second light source (7) emits diagnostic light for fluorescence diagnostics.

8. The dental handpiece (1) according to claim 7, **characterized in that** the diagnostic light has a spectrum with a wavelength between 380 nm and 450 nm.

9. The dental handpiece (1) according to one of claims 1 to 8, **characterized in that** the dental handpiece (1) has a control (49) which, in the first mode, switches on the first light source (6) and switches off the second light source (7) and, in the second mode, switches on the second light source (7) and switches off the first light source (6).

10. The dental handpiece (1) according to claim 9, **characterized in that** a sensor (47, 48) that sends a signal to the control (49) is activated by the mechanical shift of the second component (3) relative to the first component (2) between the first mode and the second mode.

## Revendications

1. Pièce à main dentaire (1) comprenant un premier élément (2) et un deuxième élément (3), où le premier élément (2) inclut au moins deux sources de lumière (6, 7), où le deuxième élément (3) inclut au moins un guide de lumière (11), dirigeant des rayons lumineux (12) émanant de l'une des sources de lumière (6, 7), vers une sortie de lumière (13) du deuxième élément (3), où dans un premier mode, le guide de lumière (11) est disposé dans une première trajectoire de rayon (50) de la première source de lumière (6) et dans au moins un deuxième mode, le guide de lumière (11) est disposé dans une deuxième trajectoire de rayon (51) de la deuxième source de lumière (7), où un dispositif de réglage mécanique (21, 32), par décalage mécanique du deuxième élément (3) par rapport au premier élément (2) permet de régler la pièce à main dentaire (1) entre le premier mode et le deuxième mode, où le dispositif de réglage mécanique (21, 32) est configuré de telle sorte qu'il permette un décalage mécanique par rotation (33) du deuxième élément (3) par rapport au premier élément (1) autour d'un axe de rotation commun (18), **caractérisée en ce que,** lors de la rotation, le premier élément (1) reste lié au deuxième élément (3).

2. Pièce à main dentaire (1) selon la revendication 1, **caractérisée en ce que** le dispositif de réglage mécanique (21, 32) présente une première butée (45) pour le premier mode et une deuxième butée (46) pour le deuxième mode.

3. Pièce à main dentaire (1) selon la revendication 1 ou 2, **caractérisée en ce que** le dispositif de réglage mécanique (21, 32) présente un premier moyen d'encliquetage pour le premier mode et un deuxième moyen d'encliquetage pour le deuxième mode.

4. Pièce à main dentaire (1) selon l'une des revendications 1 à 3, **caractérisée en ce que** le guide de lumière (11) est taillé de telle sorte qu'une surface de couplage (16) soit bombée et agisse comme une lentille convergente.

5. Pièce à main dentaire (1) selon l'une des revendications 1 à 4, **caractérisée en ce que** le premier élément (2) comprend un moteur électrique (4), où la première source de lumière (6) et la deuxième source de lumière (7) sont disposées sur une surface (5), tournée vers le deuxième élément (3).

6. Pièce à main dentaire (1) selon l'une des revendications 1 à 5 **caractérisée en ce que** le deuxième élément (3) est une pièce angulaire présentant un outil de traitement (10) dans une partie de tête (9) de la pièce angulaire, où la sortie de lumière (13) est agencée pour l'éclairage de la zone à traiter (15) également dans la partie de tête (9) de la pièce angulaire.

7. Pièce à main dentaire (1) selon l'une des revendications 1 à 6 **caractérisée en ce que** la première source de lumière (6) émet une lumière d'éclairage blanche et la deuxième source de lumière (7) diffuse une lumière de diagnostic pour un diagnostic par fluorescence.

8. Pièce à main dentaire (1) selon la revendication 7 **caractérisée en ce que** la lumière de diagnostic présente un spectre avec une longueur d'onde comprise entre 380 nm et 450 nm.

9. Pièce à main dentaire (1) selon l'une des revendications 1 à 8 **caractérisée en ce que** la pièce à main dentaire (1) présente une commande (49) qui, dans le premier mode allume la première source de lumière (6) et éteint la deuxième source de lumière (7) et qui, dans le deuxième mode, allume la deuxième source de lumière (7) et éteint la première source de lumière (6).

10. Pièce à main dentaire (1) selon la revendication 9 **caractérisée en ce que** le décalage mécanique du deuxième élément (3) par rapport au premier élément (2), entre le premier mode et le deuxième mode, permet de déclencher un capteur (47, 48) transmettant un signal à la commande (49).
